# EUROPEAN PATENT APPLICATION

(11) **EP 4 733 932 A2**
(43) Date of publication of application: **29.04.2026**
(21) Application number: 26163256.6
(22) Date of filing: 07.03.2024
(51) Int. Cl.: G06F 9/38

(54) **OUT-OF-ORDER PROCESSOR WITH RENAME MAP TABLE RECOVERY FEATURES**

(62) Divisional of application: 24718629.9
(71) Applicant: Google LLC, Mountain View, CA 94043 (US)
(72) Inventor: ESPER, John Michael, Mountain View, 94043 (US); PRIYADARSHI, Shivam, Mountain View, 94043 (US); CHIRRA, Vidisha Reddy, Mountain View, 94043 (US); LEE, Chang-Chia, Mountain View, 94043 (US); CHANG, Wan Yun, Mountain View, 94043 (US)
(74) Representative: Marks & Clerk GST

(57) **Abstract**

One aspect is a method for recovering a rename map table for an out-of-order processor after a flush operation, the method includes executing, by an out-of-order processor, instructions including a flush operation resulting from a branch misprediction of a branch instruction. The out-of-order processor includes a reorder buffer tracking a program order for the instructions and a rename map table mapping multiple logical registers to multiple physical registers. The method also includes, in response to executing the flush operation, grouping the instructions, ordered from oldest to youngest according to the program order tracked in the reorder buffer, into multiple of segments, comparing the multiple segments to identify segments that contain a youngest superset of instructions that wrote to the multiple logical registers between a head of the reorder buffer and the branch instruction, and performing a recovery walk of the identified segments to recover the rename map table.

## Description

### BACKGROUND

Out-of-order processors are designed to optimize computational efficiency by executing instructions in a sequence different from their original program order. Out-of-order processors are designed to minimize potential delays that would otherwise occur while the processor is waiting for an operation to complete. For example, a processor can be designed to complete other instructions while waiting for fetching data from memory. Out-of-order processors are configured to ensure that the final outcomes align with the original program order, thereby maintaining the integrity of the program execution with the reordering of the instructions during execution. Out-of-order processors can significantly enhance processing speed and overall performance of a computing system.

Out-of-order processors use speculation techniques such as branch prediction to improve the flow in the instruction pipeline by trying to guess which way a branch (e.g., an if-then-else structure) will go before the result is known definitively. Branch prediction can mitigate delays that occur when a processor is waiting for certain operations to complete and allow for further rearranging of the order of operations during these waiting periods.

### SUMMARY

This specification describes technologies relating to an out-of-order processor with rename map table recovery features. In some implementations, in order to recover from a speculative misprediction (e.g., a branch misprediction, a memory dependence misprediction), the out-of-order processor is configured to identify the youngest write instructions before a branch instruction, corresponding to the speculative misprediction, for the logical registers that are mapped by the rename map table. The out-of-order processor walks the identified youngest write instructions to recover the rename map table to the state it was in prior to the branch instruction. In some implementations, the out-of-order processor groups the instructions older than the branch instructions into segments. In these implementations, the out-of-order processor identifies the segments that contain the youngest write instructions, that are older than the branch instruction, for the logical registers that are mapped by the rename map table, and walks the instructions in the identified segments to recover the rename map table.

In one aspect, a method for recovering a rename map table for an out-of-order processor after a flush operation is disclosed. The method includes executing, by an out-of-order processor, instructions including a flush operation resulting from a branch misprediction of a branch instruction. The out-of-order processor includes a reorder buffer tracking a program order for the instructions and a rename map table mapping multiple logical registers to multiple physical registers. The method also includes, in response to executing the flush operation, grouping the instructions, ordered from oldest to youngest according to the program order tracked in the reorder buffer, into multiple of segments, comparing the multiple segments to identify segments that contain a youngest superset of instructions that wrote to the multiple logical registers between a head of the reorder buffer and the branch instruction, and performing a recovery walk of the identified segments to recover the rename map table.

In another aspect, an out-of-order processor is disclosed. The out-of-order processor includes multiple physical registers. a rename map table configured to map multiple logical registers to the multiple physical registers in the out-of-order processor, and a reorder buffer configured to track a program order for instructions. The out-of-order processor is configured to recover the rename map table after a flush operation resulting from a branch misprediction of a branch instruction using circuitry. The circuitry is configured to group the instructions, ordered from oldest to youngest according to the program order tracked in the reorder buffer, into multiple segments, compare the multiple segments to identify segments that contain a youngest superset of instructions that wrote to the multiple logical registers between a head of the reorder buffer and the branch instruction, and perform a recovery walk of the identified segments to recover the rename map table.

In yet another aspect a method for determining when an older segment of instructions are not required to be walked in order to recover a rename map table in an out-of-order processor is disclosed. The method includes grouping instructions in a reorder buffer of an out-of-order processor into an older segment of instructions and a younger segment of instructions, populating an older segment bit vector, each bit in the older segment bit vector corresponding to a logical register in an out-of-order processor and being set to 1 when the logical register corresponding to the bit was written to by an instruction in the older segment of instructions, populating a younger segment bit vector, each bit in the younger segment bit vector corresponds to one of the logical registers in the out-of-order processor and being set to 1 when the logical register corresponding to the bit was written to by an instruction in the younger segment of instructions, performing a logical bitOR operation of the older segment bit vector and the younger segment bit vector, and determining that the older segment of instructions are not required to be walked in order to recover a rename map table of the out-of-order processor when a result of the logical bitOR operation of the older segment bit vector and the younger segment bit vector is equal to the younger segment bit vector.

Particular embodiments of the subject matter described in this specification can be implemented so as to realize one or more of the following advantages. Improvements to the performance of an out-of-order processor including improving the speed to recover a rename map table, thereby reducing the latency of the out-of-order processor. Reduction in hardware costs, resulting in a reduction of power required to operate the out-of-order processor and a reduction in the area on the out-of-order processor required for implementing the recovery circuitry. Advantages of a fast recovery process for the rename map table include allowing for the rename map table to be recovered entirely inside the time it takes to restart the instruction fetch pipeline, such that the rename map table recovery process is not a bottleneck to a restart after a flush.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates a schematic flow diagram of an example out-of-order processor.
FIG. 2 illustrates a schematic flow diagram of an example rename map table recovery module of the out-of-order processor illustrated in FIG. 1.
FIG. 3 illustrates an example method for recovering a rename map table for an out-of-order processor.
FIG. 4 illustrates an example method for comparing segments of instructions to identify a minimal number of segments of instructions that are needed to perform a rename map table recovery walk.
FIG. 5 illustrates an example method for determining when an older segment of instructions are not required to be walked in order to recover a rename map table in an out-of-order processor.
FIG. 6 illustrates a logical flow diagram of a module used to identify a minimal number of segments of instructions that are needed to perform a rename map table recovery walk.
FIG. 7A is a visualization of an example segmentation of instructions in a reorder buffer.
FIG. 7B is a visualization of an example intra-bank comparison of segments of instructions in the reorder buffer.
FIG. 7C is a visualization of an example inter-bank comparison of segments of instructions in the reorder buffer.
FIG. 7D illustrates a visualization identifying the minimal number of segments containing instructions that are needed to perform a rename map table recovery walk.

Like reference numbers and designations in the various drawings indicate like elements.

### DETAILED DESCRIPTION

This specification generally describes an out-of-order processor with rename map table recovery features. In some examples, the out-of-order processor executes instructions in an order based on availability of input data rather than the original order in a program leading to performance improvements. The out-of-order processor uses a rename map table (RMT) to track mappings of logical registers to physical registers, thereby ensuring that the correct data is accessed even as instructions are executed out-of-order. In some implementations, the out-of-order processor uses branch prediction to optimize instruction flow by guessing a path of execution in advance. In some cases, the out-of-order processor will make an incorrect branch prediction (e.g., a branch misprediction), leading to a disruption in the state and flow of execution. For example, after a branch misprediction, the RMT may no longer store the correct mappings for the correct instruction path. In some examples, the RMT may need to be recovered in response to other circumstances. For example, in response to flush operations that are triggered based on a variety of other circumstances that occur during the execution of instructions. The example out-of-order processors disclosed herein include circuitry to recover the RMT. Out-of-order processors can implement multiple speculative techniques in addition to branch prediction, such as memory dependance prediction or other speculative predictions which may result in a state where the RMT needs to be repaired. Although many of the examples described herein refer to branch predictions, the techniques disclosed herein can be implemented to recover the RMT for these other speculative techniques, as well as other flush and RMT recovery scenarios, in the same or similar manner as the examples described for recovering the RMT in response to a branch misprediction.

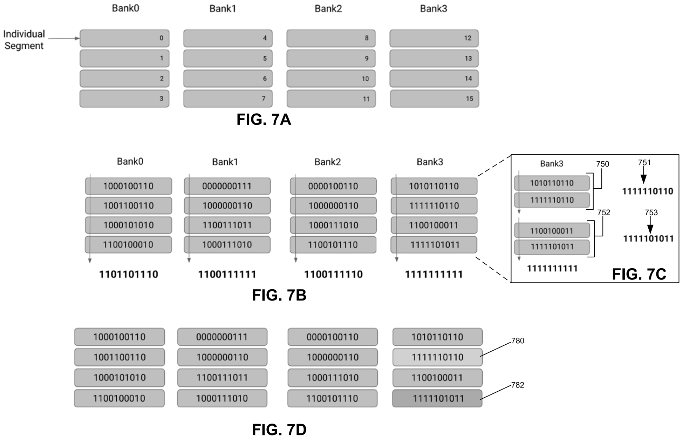

In some implementations, a reorder buffer (ROB) of the out-of-order processor is walked to recover an RMT. In some examples, a forward walk of the ROB is performed, where the recovery walk starts with an architectural copy of the RMT (in some examples, retrieved from an architected map table) and the ROB mappings are walked forward to the branch. In some examples, the ROB is walked in a forward manner and the logical-to-physical mappings are used to recover the mapping in the RMT. RMT recovery circuitry is configured to identify instructions in the ROB that wrote to a register (e.g., of the instructions between the head of the reorder buffer and the branch instruction) and walk a minimal number of instructions that ensure that the youngest instructions that wrote to each of the logical registers are walked, where the youngest superset of instructions are the instructions that most recently wrote to each of the logical registers that were previously written to by older instructions. In some examples, groups of segments in the ROB are segmented and compared to determine which segment has a superset of instructions that wrote to the logical registers of all preceding (older) segments. A non-limiting example to visualize a recovery walk process is illustrated and described in reference to FIGs. 7A-7D.

In some implementations, in order to recover from a branch-misprediction, the out-of-order processor is configured to identify a youngest super set of instructions before a branch instruction, corresponding to the branch misprediction, that includes at least one instruction that wrote to each of the logical registers that are mapped by the RMT. The out-of-order processor walks the identified youngest super set of instructions (or super set of segments of instructions) to revert the RMT to the state it was in prior to the branch instruction. In some implementations, the youngest segment (e.g., the segment which includes the branch instruction) is required to always be walked. In some implementations, the out-of-order processor groups the instructions older than the branch instruction into segments. In these implementations, the out-of-order processor identifies the segments that collectively contain the youngest instructions that wrote to each of the logical registers mapped by the RMT and walks the instructions in the identified segments to recover the rename map table. Identifying and walking only the youngest instructions that wrote to a logical register (or only the segments housing the youngest instructions) allows the out-of-order processor to quickly recover the RMT in response to a branch-misprediction, thereby improving the performance of the out-of-order processor.

In some example implementations, the RMT maintains a logical-to-physical mapping for every logical register of the instruction set architecture and physical registers of the processor. In some examples, the allocation width for the RMT is the same as the reorder buffer (ROB) size. In some example implementations, the size of the ROB is larger than the number of write ports to the RMT. Advantages of the systems and methods disclosed herein include improving the efficiency of walking ROB, which results in overall performance improvements for out-of-order processors even as the size of the ROB continues to scale.

In some examples of the out-of-order processors disclosed herein, the RMT is recovered by the time the first instruction after the flush is fetched by front end circuitry and has arrived at the RMT interface. The systems and methods disclosed herein allow for fast recovery of the RMT, thereby reducing the latency and thereby overall performance of the processor without a larger hardware cost. Advantages of the system and methods include improved processor performance, reduction of required power usage, and reduction in area of the processor used for RMT recovery.

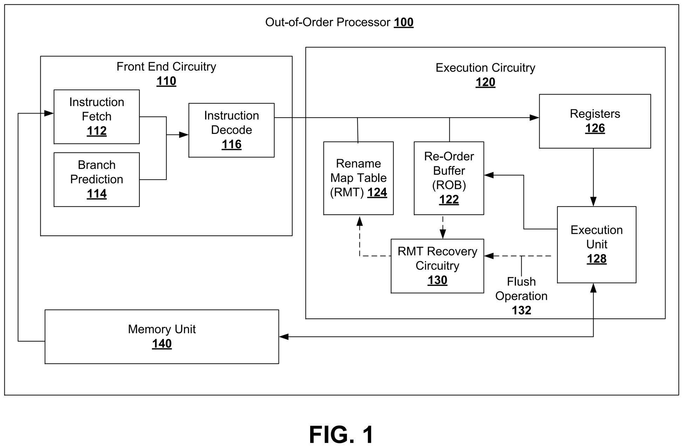

FIG. 1 illustrates a schematic flow diagram of an example out-of-order processor 100 (sometimes referred to herein as the processor 100). The out-order processor 100 includes front end circuitry 110, and execution circuitry 120. The out-of-order processor 100 is configured to interface with a memory unit 140.

The front-end circuitry 110 is configured to fetch and decode instructions received from the memory unit 140. The front end circuitry 110 includes instruction fetch module 112, branch prediction module 114, and instruction decode module 116.

Instruction fetch is a step in an instruction cycle of the out-of-order processor 100. The instruction fetch module 112 fetches instructions from the memory unit 140. The instruction fetch module 112 can use a program counter to access the memory location where the next set of instructions are stored. The instruction fetch module 112 updates the program counter to reflect the retrieved instructions. When a flush operation is executed, the front-end circuitry 110 is configured to repair its state. For example, the instruction fetch module 112 will update the program counter and a pointer for retrieving the correct instructions from a beginning of a branch.

The branch prediction module 114 is configured to optimize instruction flow by predicting an execution path of instructions in advance, thereby minimizing stalls that would otherwise be caused by various instructions, such as control instructions. In the example shown, branch prediction module 114 is performed during the instruction fetch stage. For example, if an instruction fetched from memory is a branch instruction, the branch prediction module 114 is configured to make a prediction of whether the branch will be taken, where this prediction determines the next instruction fetched by the instruction fetch module 112.

The instruction decode module 116 interprets the instructions retrieved by the instruction fetch module 112. In some implementations, this includes determining the type of operation and operands to be used. In some implementations, after the instruction decode module 116 decodes the instructions a rename module (that can include the RMT 124) performs register renaming by giving each instruction of the decoded instructions a unique identifier that allows the execution circuitry 120 to execute instructions out-of-order while maintaining data dependencies.

The execution circuitry 120 includes circuitry for a reorder buffer (ROB) 112, a rename map table (RMT) 124, an architected map table (AMT) 125, registers 126, an execution unit 128, and a rename map table recovery (RMT) module 130.

The ROB 112 is a hardware unit configured to support out-order and/or speculative instruction execution. The ROB 112 is configured to keep track of an original program order. In some implementations, the ROB 112 stores execution results (output from the execution unit 128) against instructions to ensure results are committed in order to prevent data hazards such as read ahead of write (RAW), write ahead of read (WAR) and write ahead of write (WAW). In some implementations, the ROB 122 is a circular buffer and provides a first-in-first-out (FIFO) instruction ordering queue. In some implementations, the ROB 122 tracks that state of instructions in the execution pipeline, after the instructions are decoded and renamed. In some examples, when an instruction at the head of the ROB is executed, the instruction is committed. In some examples, the ROB 122 includes a pointer to the head of the circular buffer and/or a tail of the circular buffer.

The RMT 124 stores logical-to-physical mapping for the registers 126. In some implementations, the RMT 124 maps to architectural registers, physical registers, non-architectural renamed registers, or combinations thereof. In some implementations, the write ports to the RMT 124 equals the allocation width of the out-order-processor. In some implementations, the out-of-order window (e.g., ROB size) is larger (in some examples significantly larger), than the width of the out-out-order processor 100. In these cases, identifying the youngest subset of instructions to walk is important for improving the performance because of the large size of the ROB.

The instruction decode 116, ROB 122, RMT 124, and AMT 125 operate together to manage instruction execution state, thereby allowing for the execution of instruction out-of-order, and for the recovery to a correct machine state in the event of a flush. The instruction decode 116 decodes the fetched instructions and assigns registers 126 to hold their results (sometimes referred to as register renaming). The decoded instructions are inserted in both the ROB 122 and the instruction window for execution by the execution unit 128. The RMT 124 stores the mapping of the fetched instructions to the registers 126.

The AMT 125 is used to track and/or manage register renaming, including to track a non-speculative state of the machine. In some examples, the AMT 125 stores an architectural (e.g., retirement) copy of the RMT 124 defining a state of the machine at a point in time before the RMT 124 is populated with mappings from a speculative branch of a program. In some examples, the RMT 124 copies the architectural copy of the RMT 124 from AMT 125 as part of the recovery process of the RMT 124. For example, the architectural copy of the RMT 124 is copied from the AMT 125, and then a recovery walk of the ROB 122 is performed to recover the RMT 124. In some examples, these steps are performed using the RMT recovery module 130.

The registers 126 are high-speed storage units that hold data currently being processed and/or data about to be processed by the execution unit 128. In some implementations, the registers 128 include architectural registers. As discussed above, in some examples, the registers include non-architectural renamed registers. The registers 126 include instruction registers storing instructions to be executed by the execution unit 128.

The execution unit 128 executes the instructions, stored in the instruction registers. The execution unit 128 includes a plurality of units for executing logic as defined by the instruction set architecture of the out or order processor 100. In the example shown, the execution unit interfaces with a ROB 122 to update the ROB 122 on the execution of instructions. In the event of a branch misprediction (or other flush scenario), the execution unit 128 sends a flush operation signal 132 to the RMT recovery module 130.

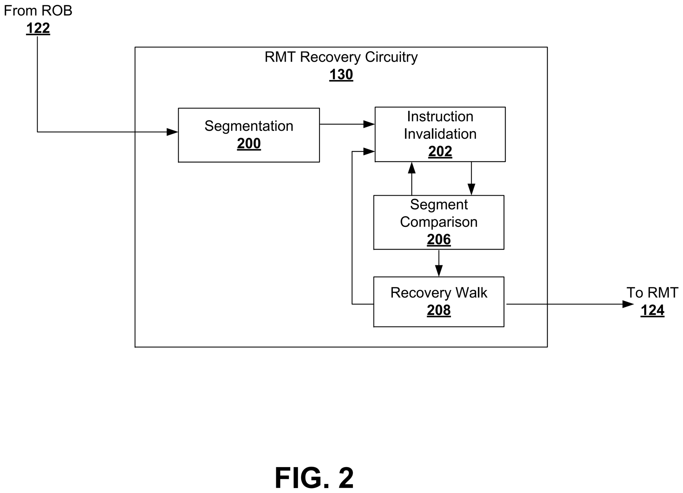

The RMT recovery module 130 includes circuitry to walk the ROB 122 in order to recover the RMT 124. In some implementations, the RMT recovery module 130 is configured to identify a minimal number of reorder buffer entries in the ROB 122 (corresponding to instructions) that are needed by a flush recovery walk. In some implementations, the RMT recovery module 130 includes circuitry to perform a forward walk of the ROB 122. In some implementations, the RMT recovery module 130 includes circuitry to perform a backward walk of the ROB 122. An example of the RMT recovery module 130 is illustrated and described in reference to FIG. 2.

The RMT recovery module 130 is configured to recover the RMT 124 after the flush operation 132. In some examples, the flush operation 132 is triggered by a branch misprediction for a previously executed branch instruction. The RMT recovery module 130 is configured to recover the RMT 124 to the state it was in prior to the branch instruction quickly to avoid latency in the execution of the program. For example, the RMT recovery module 130 can be configured to recover the RMT 124 before the next instruction is ready for execution (e.g., before the instruction, is fetched (by the instruction fetch module 112), decoded (by the instruction decode module 116), and ready to interface with the RMT 124. In order to quickly recover the RMT 124, the RMT recovery module 130 is configured to identify the youngest superset of instructions that wrote to a register before the branch instruction for each of the logical registers that are mapped by the RMT 124 and were written to by at least one instruction older than the branch instruction. This allows the RMT recovery module 130 to walk only the identified youngest instructions for each of the logical registers to recover the RMT 124 to the state it was in prior to the branch instruction. In some implementations, the RMT recovery module 130 groups the instructions older than the branch instruction into segments. In these implementations, the RMT recovery module 130 identifies the segments that contain the youngest instructions that wrote to each of the logical registers mapped by the RMT 124 and recovers the RMT 124 by only walking the instructions in the identified segments. In some examples, the RMT recovery module 130 identifies the segments that contain the youngest writer to each of the different logical registers between the head of the reorder buffer and the branch instruction.

In response to a flush operation 132, the RMT recovery module 130 determines which instructions of the ROB 122 need to be walked in order to recover the RMT 124. As discussed herein, recovering the RMT 124 quickly is important for the performance of the out-of-order processor 100. The RMT recovery module 130 is configured to determine a minimal number of instructions, or sets of instructions (e.g., segments) that are needed to be walked in order to recover the RMT 124.

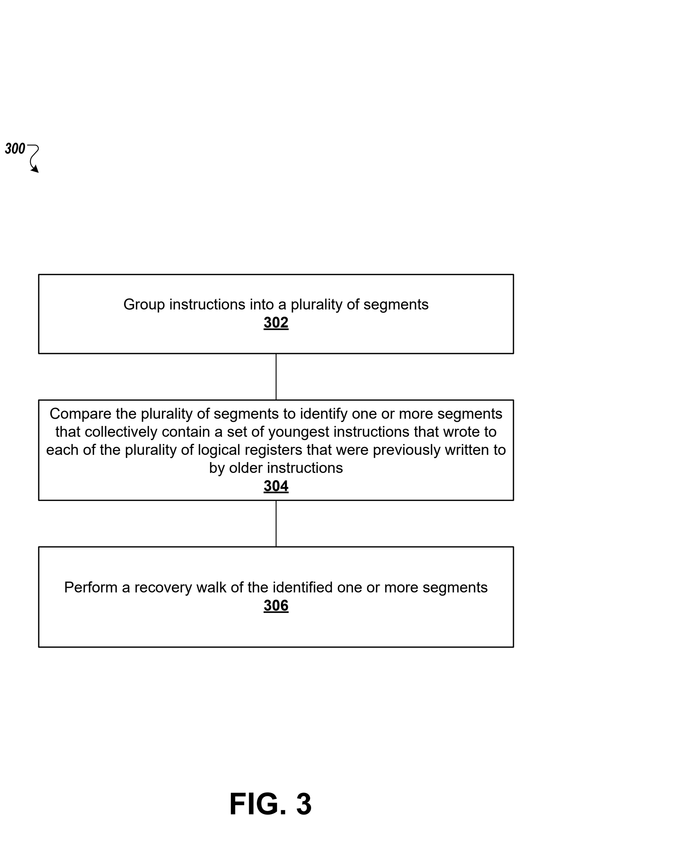

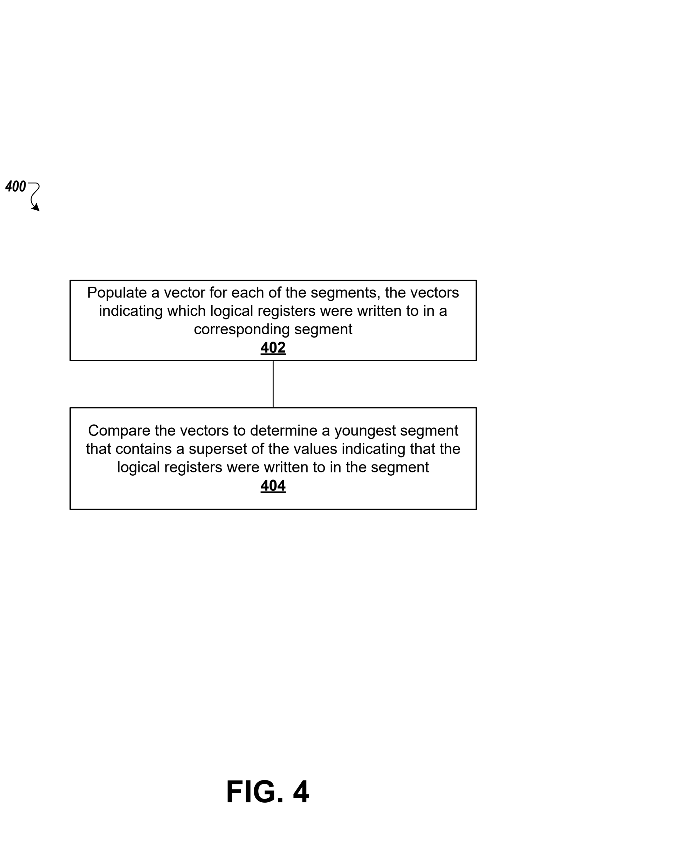

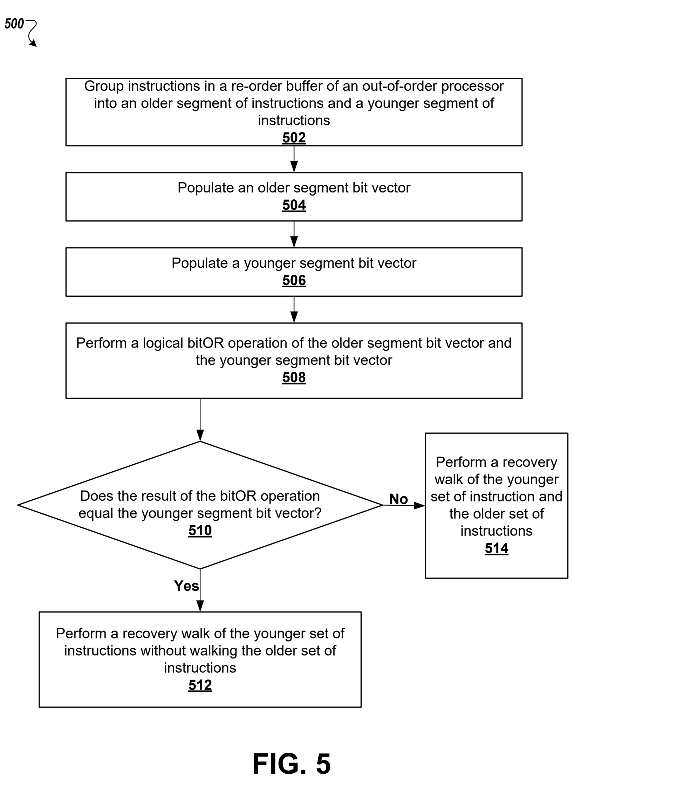

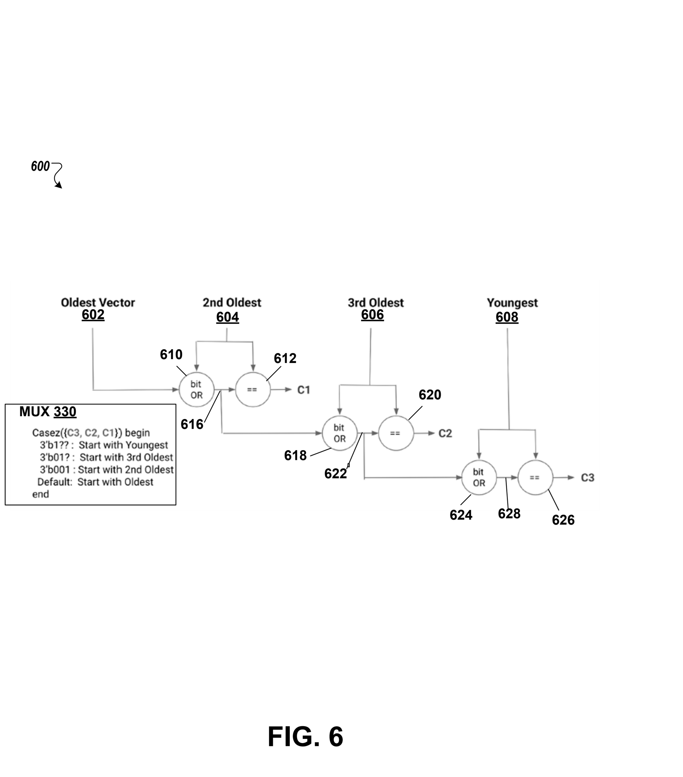

An example method 300 for recovering a rename map table for an out-of-order processor is illustrated and described in reference to FIG 3, an example method for comparing segments of instructions to identify a minimal number of segments of instructions that are needed to perform a rename map table recovery walk is illustrated and described in reference to FIG. 4, and an example method for determining when an older segment of instructions are not required to be walked in order to recover a rename map table in an out-of-order processor is illustrated and describe in reference to FIG. 5. Each of these methods individually and/or in various combinations are implemented as part of the RMT recovery module 130 in various embodiments. Additionally or alternatively, the logical flow diagram illustrated and described in FIG. 6 can be implemented in the RMT recovery module 130.

The memory unit 140 stores instructions for a program to be executed by the out-of-order processor 100. The memory unit 140 can also interface with the execution unit 128 to provide data use for execution and/or store results (e.g., as part of memory read/memory write instructions). In some implementations, the memory unit 104 is random-access memory (RAM).

FIG. 2 illustrates a schematic flow diagram of the example remap table (RMT) recovery module 130 of the out-of-order processor 100 illustrated in FIG. 1. The RMT recovery module 130 includes a segmentation module 204, instruction invalidation module 202, segment comparison module, and recovery walk module 208.

As discussed above, the RMT recovery module 130 is configured to quickly recover the RMT after a branch misprediction. For example, the RMT recovery module 130 be configured to recover the RMT before the next instruction is ready to interface with the RMT (e.g., before the instruction is fetched, decoded, and inserted in the execution pipeline). In order to quickly recover the RMT, the RMT recovery module 130 is configured to identify the youngest instructions before the branch instruction for each of the logical registers that are mapped by the RMT 124 and were written to by at least one instruction older than the branch instruction. This allows the RMT recovery module 130 to walk a minimal number of instructions to revert the RMT to the state it was in prior to the branch instruction. In some implementations, the RMT recovery module 130 groups the instructions older than the branch instruction into segments. In these implementations, the RMT recovery module 130 identifies the segments that contain the youngest superset of instructions that wrote to the logical registers mapped by the RMT 124 and recovers the RMT by only walking the instructions in the identified segments. For example, the RMT recovery module can identify the segments that contain the youngest writer to the different logical registers between the head of the reorder buffer and the branch instruction, where the RMT is recovered by only walking the instructions in the identified segments.

In the example shown, the segmentation module 200 is configured to receive instructions from the ROB 122. The instructions from the ROB 122, in some examples organized as a circular buffer, are ordered from oldest to youngest and then grouped into a plurality of segments of instructions. In some examples, the ROB includes a pointer to a head of the circular buffer which indicates that the corresponding instruction is the oldest and/or a pointer to a tail of the circular buffer indicating that the corresponding instruction is the youngest instruction. In some examples, the segmentation module 200 is further configured to group the plurality of segments into a plurality of banks.

The instruction invalidation module 202 is configured to invalidate segments of instructions which are not required to be walked in order to recover the RMT 124. In some examples, the segments of instructions that are set to occur after the flush instruction (e.g., the instructions younger than the flush instruction) are invalidated, because these instructions are not required to recover the state of the RMT. For example, if a flush operation occurs in-response to a branch mis-prediction, the RMT recovery module 130 is configured to recover the RMT to the state it was in prior to the branch mis-prediction. Accordingly, the instructions that occur after the flush operation associated with the branch mis-prediction are not needed to be walked. The instruction validation module 202 is also configured to invalidate segments of instructions that are not needed to be walked to recover the RMT as determined by the segment comparison module 206. In some implementations, the instruction invalidation module 202 invalidates segments of instructions by setting the segments of instructions to zero (or another value indicative of the segment of instructions being invalid).

The segment comparison module 206 compares segments of instructions to identify one or more segments that contain instructions that wrote to each of the plurality of logical registers that were previously written to by older instructions. For example, the segments that contain the youngest writer to each of the different logical registers between the head of the reorder buffer and the branch instruction. In some examples, for the segment comparison module 206 includes logic to populating a vector (e.g., a bit vector) for each segment of the plurality of segments, where each entry in the vector corresponds to a logical register of the plurality of logical registers and when it is determined that the logical register was written to in the segment, setting the entry in the vector corresponding to the logical register to a value indicating that the logical register was written to in the segment (e.g., by setting the bit to 1). The circuitry can then compare the vectors to identify one or more vectors corresponding to the one or more segments that collectively contain a superset of the values indicating that the logical registers were written to in the segment. In some examples, these comparisons are performed using bitOR logic gates and XOR logic gates and at least one mux gate. For example, as shown in FIG. 6. In some implementations, the segment comparison module 206 includes one or more bitOR logical gates, one or more XOR logical gates, and at least one mux configured to compare the plurality of segments to identify the one or more segments that collectively contain the instructions that wrote to each of the plurality of logical registers that were previously written to by older instructions.

As discussed above, in some examples, the instructions from the ROB are organized into segments and banks of segments. In these examples, the segment comparison module 206 is configured to perform intra-bank comparisons and inter-bank comparisons. The inter-bank comparisons are made to identify a bank of the plurality of banks that contains the instructions that wrote to each of the plurality of logical registers that were previously written to by the older instructions. The intra-bank comparisons are performed to compare the segments within each bank to identify the youngest one or more segments within each bank that contain the youngest instructions that wrote to each of the plurality of logical registers that were previously written to by older instructions in the bank. In some implementations, the intra-bank comparisons are performed in parallel with inter-bank comparisons. In some implementations, the intra-bank comparisons are performed in parallel with the comparison of the plurality of banks. A non-limiting example is provided to visualize the inter-bank and intra-bank comparisons in FIGs. 7A-D.

In some examples, the segment comparison module 206 is configured to interface with the instruction invalidation module 202. For example, the segment comparison module 206 may identify a segment to start the recovery walk where, in the case of a forward walk, the starting segment is the oldest segment that is identified as being required to be walked. The segment comparison module then sets the segments older than the starting segment as invalid (e.g., set to zero) by the instruction invalidation module 202. Additionally, after a segment is walked by the recovery walk module 208, the segment is set to be invalidated. The process continues with the next segment that needs to be walked, where the next segment is identified and all segments older than the next segment are set to be invalidated. This process is repeated until all of the segments have been walked resulting in all of the one or more segments being invalidated (e.g., all vectors being set to zero).

The recovery walk module 208 is configured to recover the map of logical register names to the RMT 124 after a flush operation. In some example implementations, the recovery walk module 206 is configured to perform a forward walk of the segments of instructions identified via the segment comparison module 206. In other implementations, the recovery walk module 206 is configured to perform backward walk of the segments of instructions identified via the segment comparison module 206.

FIG. 3 illustrates an example method 300 for recovering a rename map table (RMT) for an out-of-order processor. In some examples, the method 300 is performed using circuitry on an out-of-order processor. For example, as part of the RMT recovery module 130 illustrated and described in reference to FIGs. 1 and 2. The method 300 includes steps 302, 304, and 306.

The step 302 groups instructions into a plurality of segments. In some examples, the instructions are received from the ROB and ordered from oldest to youngest and then grouped into a plurality of segments. In some embodiments, the segments are further organized into banks. In some implementations, segments from the head of the ROB (e.g., next to retire) to the segment which contains the flushing operation are considered valid when an operation flushes the machine. In some examples, step 302 is configured to be performed in response to a flush operation being executed.

The step 304 compares the plurality of segments to identify one or more segments that collectively contain a youngest superset of instructions that wrote to the plurality of logical registers. In some implementations set 304 considers the groups of segments and tracks which segments have supersets of instructions as compared to older segments. In some examples, the youngest one or more segments that collectively contain a superset of instructions that wrote to a register (for example, an instruction for each register that is also written to by instructions in older segments) are identified as being required to walk in order to recover the RMT. An example method 400 for performing step 304 is illustrated and described in reference to FIG. 4.

Step 306 performs a recovery walk of the identified one or more segments. The recovery walk is performed on only the segments that are required to be walked in order to recover the RMT.

FIG. 4 illustrates an example method 400 for comparing segments of instructions to identify a minimal number of segments of instructions that are needed to perform a rename map table recovery walk. In some examples, the method 400 is implemented as part of step 304 illustrated and described in reference to FIG. 3. In some examples, the method 400 is performed using circuitry on an out-of-order processor. For example, as part of the RMT recovery module 130 illustrated and described in reference to FIGs. 1 and 2. The method 400 includes steps 402 and 404.

Step 402 populates a vector for each of the segments, the vectors indicating which logical registers were written to in a corresponding segment. In some implementations, the vector is a bit vector that corresponds to the number of logical registers renamed as part of register renaming and reflected in the rename map table (RMT). In some of these examples, the value indicating that the corresponding register was written to by an instruction in the segment is set to 1.

Step 404 compares the vectors to identify one or more vectors corresponding to the one or more segments that collectively contain a superset of the values indicating that the logical registers were updated in the segment. In some embodiments, step 404 compares the vectors for each of the segments to identify one or more vectors corresponding to the one or more segments that collectively contain a superset of the values indicating that the logical registers were written to in the segment.

FIG. 5 illustrates an example method 500 for determining when an older segment of instructions are not required to be walked in order to recover a rename map table in an out-of-order processor. In some examples, the method 500 is performed using circuitry on an out-of-order processor. For example, as part of the RMT recovery module 130 illustrated and described in reference to FIGs. 1 and 2. The method 500 includes steps 502, 504, 506, 508, 510, 512, and 514.

Step 502 groups instructions in a reorder buffer of the out-of-order processor into an older segment of instructions and a younger segment of instructions. In some examples, the instructions include at least some of the instructions from a head of reorder buffer to an entry in the reorder buffer that corresponds to a flush instruction, where the instructions closer to the head of the reorder buffer are older instructions as compared to the instructions that are closer to the flush operation (e.g., the younger instructions). Although the example method 500 is illustrated with two segments, the method 500 can operate with any number of segments ordered from oldest to youngest.

Step 504 populates an older segment bit vector. Each bit in the older segment bit vector corresponding to a logical register in the out-of-order processor and is set to 1 when the logical register corresponding to the bit was written to by an instruction in the older segment of instructions.

Step 506 populates a younger segment bit vector. Each bit in the younger segment bit vector corresponds to one of the logical registers in the out-of-order processor and are set to 1 when the logical register corresponding to the bit was written to by an instruction in the younger segment of instructions.

Step 508 performs a logical bitOR operation of the older segment bit vector and the younger segment bit vector. The result of the logical bitOR operation is a vector indicating the logical registers that were written to by both the older segment of instructions and the younger segment of instructions.

Step 510 determines whether the result of the bitOR operation equals the younger segment bit vector. In some implementations step 510 is implemented using an XOR gate, where it is determined that the bitOR operation result equals the younger segment bit vector when the XOR result of the bitOR operation result and the younger segment is zero. In this manner step 510 determines whether the younger segment vector is a superset of the older segment vector.

Step 512 is performed when the younger segment is a super set of the bitOR operation. For example, as determined by when a result of the bitOR operation equals the younger segment bit vector. Step 512 performs a recovery walk of the younger set of instructions without walking the older set of instructions. Because step 512 is performed when it is determined that the younger set of instructions contain a super set of instructions that wrote to a register as compared to the older segment of instructions, the older segment of instructions are not required to be walked.

Step 514 is performed when the younger segment is not a super set of the bitOR operation. For example, as determined by when a result of the bitOR operation does not equal the younger segment vector. Step 514 performs a recovery walk of the younger set of the instructions and the older set of instructions. Because step 514 is performed when it is determined that the older set of instructions include an instruction writing to register that is not rewritten to by the younger segment of instructions both the older segment of instructions and the younger segment of instructions must be walked.

FIG. 6 illustrates a logical flow diagram of a module used to identify a minimal number of segments of instructions that are needed to perform a rename map table recovery walk. In some implementations, the bit vectors for segments are compared via bitOR and XOR functions. The example shown includes a comparison of an oldest segment of instructions represented by an oldest vector 602, a 2^{nd} oldest segment of instructions represented by a 2^{nd} oldest vector 604, a 3^{rd} oldest segment of instructions represented by a 3^{rd} oldest vector 606, and a youngest segment of instructions represented by a youngest segment vector 608.

In the example shown in FIG. 7, the oldest vector 602 is compared with the 2^{nd} oldest vector 604 using a bitOR operation 610 to generate a 1^{st} bitOR result 616. The first bitOR result is processed to determine if it is equal with the 2^{nd} oldest vector 604 at 612. For example, with an XOR gate, where it is determined that the first bitOR result 616 is equal to the 2^{nd} oldest vector 604 when the XOR result is equal to zero indicating the 2^{nd} oldest vector 604 is a superset of the oldest vector 602. C1 is set to 1 when it is determined that the 2^{nd} oldest vector 604 is equal to the first bitOR result 616.

The first bitOR result 616 is then compared with the 3^{rd} oldest vector 606 using the bitOR operation 618 to generate a 2^{nd} bitOR result 622. To complete the comparison, it is determined whether the 2^{nd} bitOR result is equal to the 3^{rd} oldest vector 606 at 620. When the 2^{nd} bitOR result 616 is equal to the third oldest vector 606, it is determined that the third oldest vector 606 contains a superset of the 2^{nd} oldest vector 604 and the oldest vector 602 and C2 is set to 1. An XOR gate can be used to determine whether the 3^{rd} oldest vector 606 is equal to the 2^{nd} bitOR result.

The 2^{nd} bitOR result is compared with the youngest vector 608 using the bitOR operation 624 to generate a third bitOR result 626. To complete the comparison, it is determined whether the third bitOR result 626 equals the youngest vector 608 at 626. When it is the 3^{rd} bitOR 628 result is equal to the youngest vector 608, it is determined that the youngest vector 608 contains a superset of the 3^{rd} oldest vector, the 2^{nd} oldest vector 604, and the oldest vector 602 and C3 is set to 1.

The MUX 330 is then used to determine which segment of instructions to start a recovery walk. When C3 is set to 1 (e.g., when the 3^{rd} bitOR result 628 equals the youngest vector 608) the recovery walk starts at the youngest segment of instructions. If C3 is set to 0 (e.g., when the 3^{rd} bitOR result 628 does not equal the youngest vector 608) and C2 is set to 1 (e.g., when the 2^{nd} bitOR result 622 equals the 3^{rd} oldest vector 606) the recovery walk starts at the third oldest segment of instructions. Ff C3 and C2 are both set to zero (e.g., when the 3^{rd} bitOR result 628 does not equal the youngest vector 608 and the 2^{nd} bitOR result 622 does not equals the 3^{rd} oldest vector 606) and C1 is set to 1 (the 1^{st} bitOR result 616 equals the 2^{nd} oldest vector 604) the recovery walk start at the 2^{nd} oldest segment of instructions. Otherwise the recovery walk starts at the oldest segment of instructions.

FIGs. 7A-7D illustrate a non-limiting example to visualize the walk and recovery process. The example assumes the following out-of-order processor configuration: an 8-wide machine, 10 architectural registers, and 256 entry ROB. In this example, the instructions in the ROB are grouped into 16 segments each corresponding to 16 ROB entries/instructions. Given 10 architectural registers (e.g., R0 through R9) , each segment vector is 10 bits wide. If one of the segments had the following sequence of register updates: R2, R4, R7, R9, R4, R2, R2, R7, R2, R4, R7, R9, R4, R2, R2, R7, then the corresponding segment vector would be: 1, 0, 1, 0, 0, 1, 0, 1, 0, 0 (where each bit corresponds to the following order of registers R9, R8, R7, R6, R5, R4, R3, R2, R1, R0).

FIG. 7A is a visualization of an example segmentation of instructions in a reorder buffer. Each of the boxes shown in FIG. 7A represent segments each including a subset of instructions in the ROB. In this example, the segments are organized into banks. In the example shown in FIG. 7A the number of banks is set to four but the number of banks can be any number and the number of banks can be optimized for speed or size of the area on the chip required to implement the logic. The instructions in the ROB are stored in a circular buffer and the program order in the example shown starts from segment 0 and continues sequentially through segment 15 and back around. Segments are ordered from oldest (segment 0) to youngest (segment 15).

The number of instructions in each segment can be optimized for efficiency based on the time it takes to walk the number of instructions in the segment versus the number of instructions. For example, each instruction in a selected segment will have to be walked but to optimize for efficiency the number of segments should not be too large (e.g., resulting in a larger number of smaller segments).

In this example, segment 0 is in bank 0 and includes the oldest segment of instructions and segment 16 is in bank 3 contains the youngest segment of instructions (e.g., including the flush operation as the last operation in the youngest segment). When an operation speculatively flushes the machine, only the valid segments from the head of the ROB (next to retire) to the segment which contains the flushing operation are considered valid - and all other segments are invalidated (e.g., set to zero).

FIG. 7B is a visualization of an example intra-bank comparison of segments of instructions in the reorder buffer. As shown in FIG. 7B, each segment in the ROB is represented by a bit vector whose width corresponds to the number of logical registers renamed by the RMT. Each bit, if set, conveys that the corresponding logical register was written to in that segment of instructions in the ROB. For each bank, the segment vectors are ORed to a single vector for each bank (as shown in FIG. 7B), where the banks are ordered from oldest to youngest according to the numbering in FIG. 7A. The single vectors for each of the banks are compared across the banks to find the bank which houses the youngest superset of instructions that wrote to the logical registers. In the example of FIG. 7B bank 3 contains the youngest superset of instructions that wrote to the logical registers (in fact bank 3 includes instructions that wrote to each of the logical registers). In some embodiments, the compiled bank bit vectors are compared using bitOR and XOR functions, with the results provided to a MUX, which selects the youngest bank which contains the youngest superset of instructions that wrote to the logical registers (in this example bank 3).

As discussed above, for each bank, the segment vectors are bit ORed down to a single vector as denoted in the vectors in bold. These vectors are then compared against one another to find the youngest superset vector (e.g., the youngest vector that contains all updates made by the previous vectors). In this example, bank 3 is a super set of all the previous banks and the recovery walk will start somewhere in bank 3.

FIG. 7C is a visualization of an example inter-bank comparison of segments of instructions in the reorder buffer. In some implementations, concurrently with the inter-bank comparisons, intra-bank comparisons are done by comparing segments within each bank to determine which segment of a bank has a superset of all older segments with that same bank. The result is identifying a single segment as the start of the recovery walk. As the walk of this segment commences, this segment and all older segments are invalidated (e.g., set to zero) and the next segment needing to be walked is identified. This process repeats until all segments that require a walk have been done and the resulting ORed vectors of all the banks are equal to zero.

In some implementations, the segment that holds the flush operation is always walked to determine which logical registers were updated before and after the flush operation. In some of these implementations, a new bit vector for this segment is recreated for the new instruction stream coming.

To determine which segment within bank 3 to start off with, comparisons are done with the segment inside bank 3. In the example shown, the segments within the bank are grouped to divide the work (which can be done sequentially or in parallel) and optimize for the best results. In this example, an older group 750 of two segments in bank 3 are compared with its younger group 752 of two segments. In this example, within these groups, another level of comparison can be done to see which segment is a super set. The segments in the older group 750 are bit ORed to create an older group vector 751 and the segments in the younger group 752 are ordered to create a younger group vector 753. The younger group vector 753 is compared to the older group vector. As shown in FIG. 7C the older group 750 of 2 segments has architectural updates not accounted for in the younger group 752 (e.g., the younger group vector 753 is not a super set of the older group vector) and therefore must be walked.

Within the older group 750 of two segments the younger segment is a superset of the older segment, therefore only the younger segment needs to be walked. In the younger group of segments, the younger of the two segments is a superset of the older. Accordingly, only the younger segment of the younger group of segments needs to be walked. Overall, only two segments (segment 13 and segment 15, shown as 780 and 782 in FIG. 7D) of the 16 segments are required to be walked in order to restore the RMT.

As discussed above, FIG. 7D illustrates a visualization identifying the minimal number of segments containing instructions that are needed to perform a rename map table recovery walk. Only two segments (780 and 782) of the 16 segments are required to be walked in order to restore the RMT. Given 8 writes per cycle, these 2 segments walks required 4 cycles for full RMT recovery.

In this example of an out-of-order processor having a 256 entry ROB, 8-wide machine, and 64 Architectural Registers, and assuming each segment represents 16 ROB entries, and 16 total segments each 64 bits wide require 1024 bits of storage.

In addition to the embodiments of the attached claims and the embodiments described above, the following numbered embodiments are also innovative:
Embodiment 1 is a method for recovering a rename map table for an out-of-order processor after a flush operation, the method comprising executing, by an out-of-order processor, instructions including a flush operation resulting from a branch misprediction of a branch instruction, the out-of-order processor comprising a reorder buffer tracking a program order for the instructions and a rename map table mapping a plurality of logical registers to a plurality of physical registers, in response to executing the flush operation, grouping the instructions, ordered from oldest to youngest according to the program order tracked in the reorder buffer, into a plurality of segments, comparing the plurality of segments to identify one or more segments that collectively contain a youngest superset of instructions that wrote to the plurality of logical registers between a start of the reorder buffer and the branch instruction, and performing a recovery walk of the identified one or more segments to recover the rename map table.
Embodiment 2 is the method of embodiment 1, wherein grouping the instructions comprises grouping only the instructions between a pointer to a head of the reorder buffer to the branch instruction.
Embodiment 3 is the method of embodiment 2, the method further comprising invalidating the instructions after the branch instruction in the program order.
Embodiment 4 is the method of any of embodiments 1-3, wherein comparing the plurality of segments to identify the one or more segments comprises populating a vector for each segment of the plurality of segments, wherein each entry in the vector corresponds to a corresponding logical register of the plurality of logical registers and when it is determined that an instruction in the segment wrote to the corresponding logical register, setting the entry in the vector for the corresponding logical register to a value indicating that the corresponding logical register was updated to in the segment, and comparing the vectors to identify one or more vectors corresponding to the one or more segments that collectively contain a superset of the values indicating that the logical registers were updated in the segment.
Embodiment 5 is the method of embodiment 4, wherein the vector is a bit vector and the value indicating that the logical register was updated in the segment is 1.
Embodiment 6 is the method of claim 5, wherein comparing the vectors to identify the one or more vectors comprises performing a logical bitOR operation between a vector of an older segment and a vector of a younger segment, and determining that the younger segment is a superset of the older segment when a result of the logical bitOR operation is equal to the vector of the younger segment.
Embodiment 7 is the method of embodiment 5 or 6, the method further comprising recreating a new bit vector for a walking segment when a new instruction stream begins.
Embodiment 8 is the method of any of embodiments 1-7, wherein comparing the plurality of segments further comprises grouping the plurality of segments into a plurality of banks and comparing the plurality of banks to identify one or more banks that contain the youngest superset of segments of instructions that wrote to the plurality of logical registers between the start of the reorder buffer and the branch instruction.
Embodiment 9 is the method of embodiment 8, wherein intra-bank comparisons of segments are performed on the one or more identified banks.
Embodiment 10 is the method of embodiment 9, wherein the intra-bank comparisons are performed in parallel with the comparing of the plurality of banks.
Embodiment 11 is the method of embodiments 9, wherein the intra-bank comparisons are performed subsequently to the comparing of the plurality of banks.
Embodiment 12 is the method of any of embodiments 1-11, the method further comprising identifying a first segment of the one or more identified segments to start the recovery walk and invalidating segments older than the first segment and performing a recovery walk of the first segment.
Embodiment 13 is the method of embodiment 12, the method further comprising identifying a next segment of the identified one or more segments and invalidating all segments older than the next segment after the recovery walk of the first segment is complete.
Embodiment 14 is the method of embodiment 13, wherein the method is repeated until all of the identified one or more segments have been walked resulting in all the plurality of segments being invalidated.
Embodiment 15 is the method of any of embodiments 1-14, wherein the recovery walk of the identified one or more segments always includes a youngest segment that includes the branch instruction.
Embodiment 16 is an out-of-order processor comprising a plurality of physical registers, a rename map table configured to map a plurality of logical registers to the plurality of physical registers in the out-of-order processor, and a reorder buffer configured to tracking a program order for a plurality of instructions, wherein the out-of-order processor is configured to recover the rename map table after a flush operation resulting from a branch misprediction of a branch instruction using circuitry configured to group the plurality of instructions, ordered from oldest to youngest according to the program order tracked in the reorder buffer, into a plurality of segments, compare the plurality of segments to identify one or more segments that collectively contain a youngest superset of instructions that wrote to the plurality of logical registers between a start of the reorder buffer and the branch instruction, and perform a recovery walk of the identified one or more segments to recover the rename map table.
Embodiment 17 is the out-of-order processor of embodiment 16 further comprising one or more bitOR logical gates, one or more XOR logical gates, and at least one mux configured to compare the plurality of segments to identify the one or more segments.
Embodiment 18 is the out-of-order processor of embodiment 16 or 17, wherein the recovery walk starts from an oldest instruction in the one or more identified segments.
Embodiment 19 is the out-of-order processor of any of embodiments 16-18, wherein the recovery walk starts from a youngest instruction in the one or more identified segments.
Embodiment 20 is the out-of-order processor of any embodiments 16-19, wherein out-of-order processor is configured to recover the rename map table before a next instruction is ready for execution.
Embodiment 21 is A method for determining when an older segment of instructions are not required to be walked in order to recover a rename map table in an out-of-order processor, the method comprising grouping instructions in a reorder buffer of an out-of-order processor into an older segment of instructions and a younger segment of instructions, populating an older segment bit vector, each bit in the older segment bit vector corresponding to a logical register in an out-of-order processor and being set to 1 when the logical register corresponding to the bit was written to by an instruction in the older segment of instructions, populating a younger segment bit vector, each bit in the younger segment bit vector corresponds to one of the logical registers in the out-of-order processor and being set to 1 when the logical register corresponding to the bit was written to by an instruction in the younger segment of instructions, performing a logical bitOR operation of the older segment bit vector and the younger segment bit vector, and determining that the older segment of instructions are not required to be walked in order to recover a rename map table of the out-of-order processor when a result of the logical bitOR operation of the older segment bit vector and the younger segment bit vector is equal to the younger segment bit vector.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method (300) for recovering a rename map table for an out-of-order processor (100) after a flush operation, the method comprising:
executing, by an out-of-order processor, instructions including a flush operation (132) resulting from a branch misprediction of a branch instruction, the out-of-order processor comprising a reorder buffer (122) tracking a program order for the instructions and a rename map table (124) mapping a plurality of logical registers to a plurality of physical registers (126);
in response to executing the flush operation, grouping (302) the instructions, ordered from oldest to youngest according to the program order tracked in the reorder buffer, into a plurality of segments;
comparing (304) the plurality of segments to identify one or more segments that contain a youngest superset of instructions that wrote to the plurality of logical registers between a head of the reorder buffer and the branch instruction; and
performing (306) a recovery walk of the identified one or more segments to recover the rename map table.

2. The method of claim 1, wherein grouping the instructions comprises:
grouping only the instructions between a pointer to a head of the reorder buffer to the branch instruction.

3. The method of claim 2, the method further comprising:
invalidating the instructions after the branch instruction in the program order.

4. The method of claim 1, wherein comparing the plurality of segments further comprises:
grouping the plurality of segments into a plurality of banks; and
comparing the plurality of banks to identify one or more banks that contain the youngest superset of segments of instructions that wrote to the plurality of logical registers between the head of the reorder buffer and the branch instruction.

5. The method of claim 4, wherein intra-bank comparisons of segments are performed on the one or more identified banks.

6. The method of claim 5, wherein the intra-bank comparisons are performed in parallel with the comparing of the plurality of banks.

7. The method of claim 5, wherein the intra-bank comparisons are performed subsequently to the comparing of the plurality of banks.

8. The method of claim 1, the method further comprising:
identifying a first segment of the one or more identified segments to start the recovery walk and invalidating segments older than the first segment; and
performing a recovery walk of the first segment.

9. The method of claim 8, the method further comprising:
identifying a next segment of the identified one or more segments; and
invalidating all segments older than the next segment after the recovery walk of the first segment is complete.

10. The method of claim 9, wherein the method is repeated until all of the identified one or more segments have been walked resulting in all the plurality of segments being invalidated.

11. The method of claim 1, wherein the recovery walk of the identified one or more segments always includes a youngest segment that includes the branch instruction.

12. An out-of-order processor (100) comprising:
a plurality of physical registers (126);
a rename map table (124) configured to map a plurality of logical registers to the plurality of physical registers in the out-of-order processor; and
a reorder buffer (122) configured to tracking a program order for a plurality of instructions;
wherein the out-of-order processor is configured to recover the rename map table after a flush operation resulting from a branch misprediction of a branch instruction using circuitry configured to:
group (302) the plurality of instructions, ordered from oldest to youngest according to the program order tracked in the reorder buffer, into a plurality of segments;
compare (304) the plurality of segments to identify one or more segments that collectively contain a youngest superset of instructions that wrote to the plurality of logical registers between a head of the reorder buffer and the branch instruction; and
perform (306) a recovery walk of the identified one or more segments to recover the rename map table.

13. The out-of-order processor of claim 12, further comprising:
one or more bitOR logical gates, one or more XOR logical gates, and at least one mux configured to compare the plurality of segments to identify the one or more segments.

14. The out-of-order processor of claim 12, wherein:
the recovery walk starts from an oldest instruction in the one or more identified segments; or
the recovery walk starts from a youngest instruction in the one or more identified segments.

15. The out-of-order processor of claim 12, wherein out-of-order processor is configured to recover the rename map table before a next instruction is ready for execution.
